# EUROPÄISCHE PATENTSCHRIFT

(11) **EP 3 771 386 B1**
(45) Veröffentlichungstag und Bekanntmachung des Hinweises auf die Patenterteilung: **18.01.2023**
(21) Anmeldenummer: 20185057.5
(22) Anmeldetag: 09.07.2020
(51) Int. Cl.: A47J 43/07, A47J 36/10

(54) **KÜCHENMASCHINE MIT VERRIEGELUNGSSYSTEM**
KITCHEN APPLIANCE WITH LOCKING SYSTEM
ROBOT DE CUISINE À SYSTÈME DE VERROUILLAGE

(30) Priorität: 30.07.2019 DE 102019211309
(43) Veröffentlichungstag der Anmeldung: 03.02.2021
(73) Patentinhaber: BSH Hausgeräte GmbH, 81739 München (DE)
(72) Erfinder: Rudez, Darko, 3230 Sentjur, Slowenien (SI); Pacnik, Roman, 2383 Smartno pri Slovenj Gradcu (SI); Saruga Turinek, Niko, 3327 Smartno ob Paki (SI); Habe, Mitja, 3320 Velenje (SI); Enci, David, 3331 Nazarje (SI)

(56) Entgegenhaltungen:
- EP-A1- 2 923 621
- WO-A1-2019/012208
- US-B1- 6 340 124

## Beschreibung

### Gebiet der Erfindung

Die Erfindung betrifft eine Küchenmaschine zum bereiten von Speisen in einem Topf, aufweisend ein Verriegelungssystem, aufweisend die Komponenten eine Topfaufnahmevorrichtung der Grundmaschine mit einem zylindrischen oder konischen Wandsegment, einen zur Topfaufnahmevorrichtung formkorrespondierenden Topf, wobei der Topf in der Topfaufnahmevorrichtung an dem zylindrischen oder konischen Wandsegment anliegt, oder zu diesem unmittelbar benachbart ist, einen Topfring, der lösbar mit dem Rand des Topfes verbindbar ist, wobei der Topfring zusammen mit der Wand des Topfes einen Umschlag bildet, wobei die Falz des Umschlags als Teil des Topfrings von der Topfwand beabstandet ist, und wobei die Falz hinter das zylindrische oder konische Wandsegment greift.

### Hintergrund der Erfindung

Zum Betrieb von Küchenmaschinen mit Gar und/oder Rührfunktion ist es bekannt, dass ein in die Küchenmaschine eingesetzter Gar- oder Rührtopf verriegelt wird, damit dieser stabil in der Küchenmaschine aufgenommen ist. In modernen Küchenmaschinen ist es möglich, neben dem Rühre auch noch mit hoher elektrischer Leistung zu kochen, garen oder gar anzubraten. Beim Einsatz hoher elektrischer Leistung kann es zu Siedeverzügen kommen oder das Gargut kann überkochen. Zur Verhinderung einer Küchenhavarie ist es eine reflexartige Handlung, den Topf aus der Küchenmaschine heben zu wollen, wenn der Topf droht, überzukochen. Ist der Topf jedoch in der Küchenmaschine fixiert oder verriegelt, so kann der Topf nicht entfernt werden. Das Anheben der gesamten Küchenmaschine mitsamt Topf kann die Küchenhavarie noch verschlimmern.

Es besteht der Bedarf, in einer Küchenmaschine ein Verriegelungssystem zur Verfügung zu stellen, welches einerseits den Topf stabil in der Küchenmaschine fixiert, aber andererseits es erlaubt, gegebenenfalls mit Gewalteinwirkung den Topf schnell aus der Küchenmaschine zu entfernen.

Aus der EP 2 923 621 A1 ist ein elektrisches Haushaltsgerät zur Nahrungsmittelzubereitung bekannt, das einen Motor, einen Behälter und eine lösbare Abdeckung umfasst, wobei ein Betrieb des Motors durch eine Sicherheitsvorrichtung verhindert wird, wenn die Abdeckung nicht auf dem Behälter verriegelt ist.

### Der Erfindung zugrundeliegende Aufgabe

Aufgabe der Erfindung ist es daher, eine verbesserte Küchenmaschine mit einem Verriegelungssystem zur Verfügung zu stellen, insbesondere eine Küchenmaschine, welche eine schnelle Entfernung eines verriegelten Topfes aus der Küchenmaschine erlaubt.

### Erfindungsgemäße Lösung

Die erfindungsgemäße Aufgabe wird dadurch gelöst, dass auf der Außenseite der Falz eine Vertiefung als Falle angeordnet ist, in welche ein betätigbarer Verschlusszapfen eingreift, der aus einer Verlängerung des zylindrischen oder konischen Wandsegments herausragt. Vorteilhafte Aus- und Weiterbildungen, welche einzeln oder in Kombination miteinander eingesetzt werden können, sind Gegenstand der abhängigen Ansprüche und der nachfolgenden Beschreibung.

Nach dem Gedanken der Erfindung ist vorgesehen, dass der Topf mit einem Topfring in der Küchenmaschine befestigt wird. Der Topfring wird dazu auf den Rand des Topfes gesetzt und mit diesem entweder verriegelt oder zunächst in beliebiger Weise verbunden. Der Topfring hat einen Überstand wie ein umgebördelter Topfrand oder wie ein Umschlag. Die Falz des Umschlags steht hierbei von der Topfwand ab. Dieser Falz greift hinter ein zylindrisches oder konisches Wandsegment, das formkorrespondierend zum Topf geformt ist. Durch dieses Ineinandergreifen von Falz und Wandsegment ist der Topf schon gegen ein Kippen in er Küchenmaschine gesichert. Nicht jedoch ist der Topf gegenüber einer Rotation gesichert, die zum Beispiel durch ein Rührwerk ausgelöst werden könnte. Um den Topfring zusätzlich vor unerwünschter Rotation in der Küchenmaschine zu schützen, ist nach dem Gedanken der Erfindung vorgesehen, dass auf der Außenseite der Falz eine Vertiefung als Falle angeordnet ist, in welche zum Verriegeln ein betätigbarer Verschlusszapfen eingreift, der aus einer Verlängerung des zylindrischen oder konischen Wandsegments herausragt. Die Vertiefung entspricht somit einer Falle in einem Schloss und der Zapfen entspricht einem Schließblech in einem Schloss.

### Bevorzugte Ausgestaltungen der Erfindung

Vorteilhafte Aus- und Weiterbildungen, welche einzeln oder in Kombination miteinander eingesetzt werden können, sind Gegenstand der abhängigen Ansprüche und der nachfolgenden Beschreibung.

Um den Topf gegebenenfalls mit Kraft aus der Küchenmaschine befreien zu können, ist in einer Ausgestaltung der Erfindung vorgesehen, dass die Vertiefung auf der Außenseite der Falz einen Böschungswinkel □ von weniger als 45° aufweist und dass der Verschlusszapfen eine dazu korrespondierende Fase oder Abrundung aufweist. Anders als bei einem gattungsgemäßen Schloss, in dem das Schließblech fest in der Falle sitzt, ist es in dieser Ausgestaltung der Erfindung vorgesehen, dass der flache Böschungswinkel und die Fase oder di Abrundung an dem Zapfen ein herausgleiten des Zapfens aus der Vertiefung erlaubt, wenn die Kraft zum Entfernen des Topfes nur groß genug ist. Unter der Krafteinwirkung kann sich der Topfring elastisch deformieren und so den Topf frei geben.

Die bevorzugte erfindungsgemäße Küchenmaschine ist mit einem Heizmittel zum Erwärmen eines in dem Topf vorliegenden Garguts ausgestattet.

Für eine kraftarme, vertikale Entfernung des Topfes kann in Ausgestaltung der Erfindung vorgesehen sein, dass eine die Vertiefung auf der Außenseite der Falz zur Unterseite offen ist. Dadurch ist der Topf gegenüber Rotation in der Küchenmaschine durch den Zapfen gesichert. Der Topf ist durch das Ineinandergreifen der Falz und des Wandsegments der Grundmaschine gegenüber einem Kippen gesichert. Dennoch kann der Topf mühelos vertikal nach oben aus der Küchenmaschine gehoben werden. Dies ermöglicht ein gefahrfreies Entfernen des Topfes, sollte sich zum Beispiel ein Überkochen von Gargut ankündigen.

Der Topfring kann auf den Topfrand aufgesteckt sein. Es ist aber auch möglich, dass in Ausgestaltung der Küchenmaschine der Topfring mit dem Topf über ein Bajonett-System verbunden ist.

In besonderer Ausgestaltung der Erfindung kann vorgesehen sein, dass die hinter das zylindrische oder konische Wandsegment greifende Falz über ein Kreissegment zwischen 2° und 30° eine Verlängerung aufweist, wobei das sich zylindrische oder konische Wandsegment über ein Kreissegment zwischen 2° und 45° erstreckt und ebenfalls eine Verlängerung aufweist und mit der Verlängerung der Falz in Eingriff steht, wenn sich der Topf in der Grundmaschine befindet.

In einfacher Ausgestaltung kann vorgesehen sein, dass der Kipphebel über eine Rückstellfeder federgespannt ist und den Verschlusszapfen in der Verriegelungsposition hält. In weiterer Ausgestaltung der Erfindung kann vorgesehen sein, dass der Verschlusszapfen an einem manuell bedienbaren Kipphebel angeordnet ist, wobei der Kipphebel über einen elektromagnetisch, elektromotorisch oder auf sonstige Weise angetrieben Riegel verriegelbar ist. Der manuell betätigbare Kipphebel ermöglicht ein Entriegeln des Topfes in der Küchenmaschine, wobei der angetriebene Riegel den Kipphebel sperren kann, so dass der Topf nicht entriegelbar ist. Dies ist dafür vorgesehen, dass eine Steuerungsvorrichtung zur Sicherheit die Entriegelung sperren kann. Ein besonders bevorzugter Antrieb des Riegels ist ein Solenoid. Solenoid kann vorteilhafterweise zwei Ruhestellungen haben, zwischen denen er wechseln kann, und von denen die eine der verriegelnde und die andere der entriegelnden Stellung des Riegels entspricht.

Beim Einsatz der Steuerungsvorrichtung zur Sicherheit kann vorgesehen sein, dass der elektromagnetisch angetriebene Riegel über eine Steuerungsvorrichtung in der Küchenmaschine gesteuert ist, wobei die Steuerungsvorrichtung den angetriebenen Riegel bei einer vorbestimmten Bedingung im Verschlusszustand hält und bei einer anderen vorbestimmten Bedingung im Öffnungszustand hält. Beispielsweise kann die Steuervorrichtung den Riegel bei Überschreiten einer voreingestellten Umdrehungszahl eines in der Küchenmaschine vorhandenen Antriebsmotors für ein Rührwerk und/oder bei Überschreiten einer bestimmten Zeit Temperatur in dem Topf im Verschlusszustand hält und bei Unterschreiten dieser voreingestellten Umdrehungszahl und/oder Temperatur diesen Riegel im Öffnungszustand hält. Zu den Bedingungen können neben oder anstelle Geschwindigkeit und Temperatur andere Parameter einfließen, z. B. die Zeit, das Abarbeiten eines bestimmten Schritts in einem Rezept oder ein Steuersignal aus der Ferne.

Diese Sicherheitsverriegelung ermöglicht in einer Ausführung ein Absichern des Topfes, wenn ein Rührwerk aktiv ist, das entweder nur knetet (langsame Umdrehung, jedoch mit hohem Drehmoment), aber dennoch gefährlich ist, weil das hohe Drehmoment gefährliche Verletzungen erzeugen kann, wenn man mit der Hand ins Rührwerk greift, die Steuerungsvorrichtung kann auch das Entriegeln verhindern, wenn das Rührwerk schnell läuft und ggf. zerkleinert, wodurch ebenfalls starke und gefährliche Verletzungen entstehen können.

In noch weiterer oder alternativer Ausgestaltung der Erfindung kann vorgesehen sein, dass der elektromagnetisch angetriebene Riegel über eine Steuerungsvorrichtung in der Küchenmaschine gesteuert ist, wobei die Steuerungsvorrichtung den elektromagnetisch angetriebenen Riegel bei Überschreiten einer voreingestellten Topftemperatur im Verschlusszustand hält und bei Unterschreiten dieser voreingestellten Topftemperatur diesen Riegel im Öffnungszustand hält. Diese Sicherheitsabschaltung vermeidet, dass zum Beispiel heißer Dampf aus dem Kochtopf entwicht und den Nutzer durch den Dampf verbrüht. Besonders vorzugsweise liegen die Merkmale der Ausführungsformen dieses und es vorhergehenden Absatzes kombiniert vor.

In besonderer Ausgestaltung der Erfindung kann vorgesehen sein, dass der Verschlusszapfen mit einem Notschalter verbunden ist, der bei gewaltsamem Entfernen des Topfes aus der Grundmaschine, die gesamte Küchenmaschine stromlos schaltet. Nach dem Gedanken der Erfindung ist es vorgesehen, dass eine Öffnung oder Entfernung des Topfes gegebenenfalls unter Krafteinwirkung möglich ist, um eine Küchenhavarie zu vermeiden. In einem solchen Fall breitet sich bei einem Nutzer unter Umständen Panik aus. Unter Panik denkt der Nutzer möglicherweise nicht daran, die Küchenmaschine stromlos zu schalten. Der Notschalter ist also als Panikschutz gedacht.

### Kurzbeschreibung der Zeichnungen

Weitere vorteilhafte Ausgestaltungen werden nachfolgend anhand mehrerer in den Zeichnungen dargestellten Ausführungsbeispielen näher beschrieben, auf welche die Erfindung jedoch nicht beschränkt ist. Es zeigt:
- Fig. 1: eine Skizze der wesentlichen Teile einer Küchenmaschine,
- Fig. 2: eine Schnittzeichnung für einen vertikalen Schnitt durch den Topf und durch die Grundmaschine im Bereich der Verriegelungsanordnung,
- Fig. 3: eine Skizze eines Ausschnitts eines Wandsegments der Grundmaschine, im Bereich der Verriegelungsanordnung,
- Fig. 4: eine Skizze eines Ausschnitts eines Topfes im Bereich der Verriegelungsanordnung,
- Fig. 5: eine Skizze eines horizontalen Schnitts der Küchenmaschine Topfes im Bereich der Verriegelungsanordnung,
- Fig. 6: eine erste Variante einer Vertiefung, die in der Verriegelungsanordnung als Schlossfalle dient,
- Fig. 7: eine zweite Variante einer Vertiefung, die in der Verriegelungsanordnung als Schlossfalle dient,
- Fig. 8: eine dritte Variante einer Vertiefung, die in der Verriegelungsanordnung als Schlossfalle dient,
- Fig. 9: eine Skizze eines Kipphebelmoduls, das den Verschlusszapfen bewegt einschließlich dem elektromechanisch betriebenen Riegel.

### Detaillierte Beschreibung von Ausführungen der Erfindung

Bei der nachfolgenden Beschreibung von bevorzugten Ausführungsformen der vorliegenden Erfindung bezeichnen gleiche Bezugszeichen gleiche oder vergleichbare Komponenten.

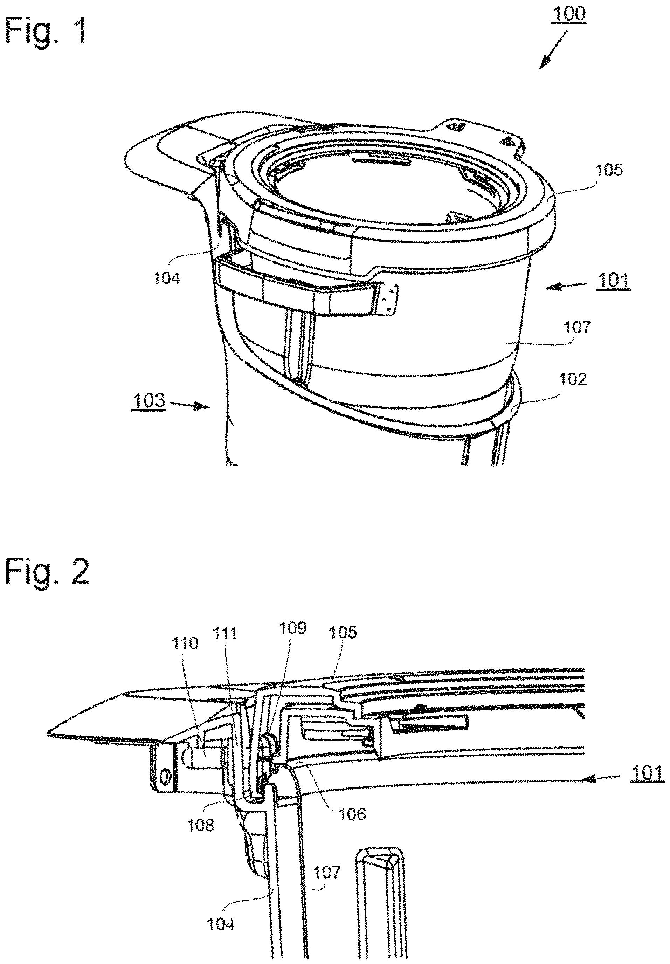

In **Figur 1** ist eine Skizze eine Skizze der wesentlichen Teile einer Küchenmaschine 100 dargestellt, in welcher ein Topf 101 in einer Topfaufnahmevorrichtung 102 einer Grundmaschine 103 aufgenommen ist. Der Topf 101 ist mit einem Topfring 105 versehen, der auf dem Rand des Topfes 101 angeordnet ist. Der Topfring 105 sichert den Topf in der Topfaufnahmevorrichtung 102, in dem der Topfring 105 in mechanischem Eingriff steht mit einem zylindrischen oder konischen Wandsegment 104, das formkorrespondierend zur Form der Wand 107 des Topfes 101 geformt ist. Einen genaueren Blick auf die Verriegelung ist in der nächsten Figur, Figur 2, dargestellt.

In **Figur 2** eine Skizze eines Ausschnitts eines Wandsegments der Grundmaschine im Bereich der Verriegelungsanordnung gezeigt. Dabei ist in dieser Skizze ein Vertikalschnitt durch diesen Bereich gezeigt. Die Küchenmaschine 100 aus Figur zum bereiten von Speisen in einem Topf 101, weist das hier gezeigte Verriegelungssystem auf, das seinerseits die folgenden Komponenten hat, aber nicht auf diese beschränkt ist: zunächst ist Topfaufnahmevorrichtung 102 der Grundmaschine 103 mit einem zylindrischen oder konischen Wandsegment 104 vorhanden. Des Weiteren weist die Küchenmaschine 100 einen zur Topfaufnahmevorrichtung 102 formkorrespondierenden Topf 101 auf dessen Wand an dem zylindrischen oder konischen Wandsegment 104 anliegt, oder zu diesem unmittelbar benachbart ist. Der Topf selbst weist einen Topfring 105 auf, der lösbar mit dem Rand 106 des Topfes 101 verbindbar ist. Der Topfring 105 kann also zum Reinigen und zum Ausgießen des Kochgutes entfernt werden. Zusammen mit dem Topfring 105 bildet die Wand 107 des Topfes 101 einen Umschlag wie ein gefalteter Rand eines Bleches, wobei die Falz 108 des Umschlags als Teil des Topfrings 105 von der Topfwand 107 beabstandet ist. Der Falz besteht aus dem Material des Topfringes, zumeist Kunststoff und die Wand des Topfes besteht in der Regel aus Edelstahl. Im eingesetzten Zustand greift die die Falz 108 hinter das zylindrische oder konische Wandsegment 104 der Grundmaschine 103 und so ist der Topf 101 gegenüber einem Kippen in der Küchenmaschine gesichert. Um den Topfring 105 rotationsfest zu sichern, ist nach dem Gedanken der Erfindung vorgesehen, dass auf der Außenseite der Falz 108 eine Vertiefung 109 als Falle, wie eine Falle für ein Schlüsselschloss angeordnet ist, in welche ein betätigbarer Verschlusszapfen 110 eingreift, der aus einer Verlängerung 111 des zylindrischen oder konischen Wandsegments der Grundmaschine herausragt. Der Verschlusszapfen 110 übernimmt dabei die Rolle des Schließbleches in einem Schlüsselschloss. Durch die Sicherung gegenüber einem sich aus der Grundmaschine lösen in zwei Freiheitsgraden, nämlich ein Kippen in beliebiger Richtung und gegenüber einem Verdrehen des Topfrings 105, ist der Topf 101 in ausreichendem Maße gesichert.

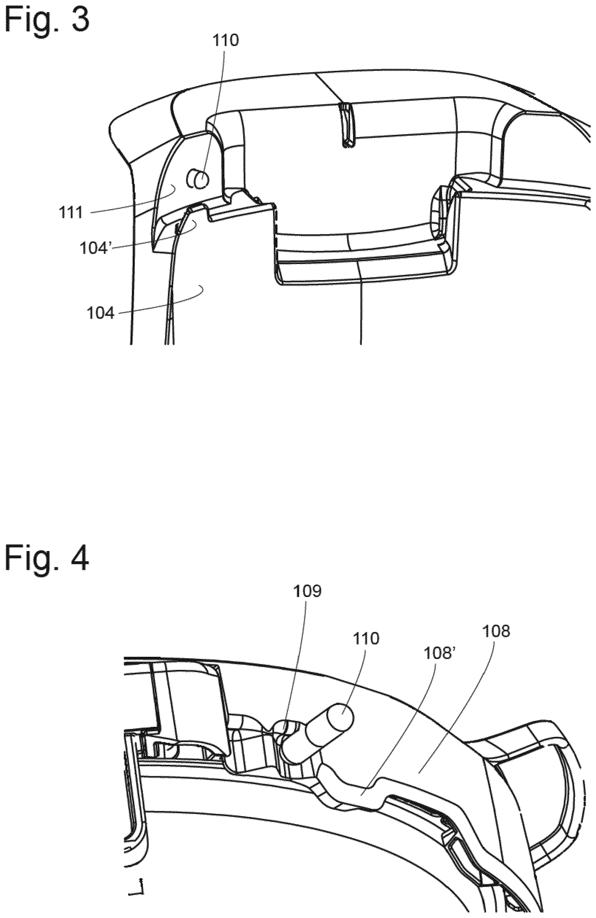

In **Figur 3** ist ein Skizzenauszug der Grundmaschine im Bereich der Verriegelungsanordnung ohne Topf 101 gezeigt. Deutlich ist das zylindrische oder konischen Wandsegment 104 zu sehen, welches hier eine Verlängerung 104' wie ein überstehender Zahn trägt, welches unter den Falz des Topfringes 105 greift. Aus einer zur Verlängerung 104' parallelversetzten Verlängerung 111 des zylindrischen oder konischen Wandsegments 104 ragt der Verriegelungszapfen, der den Topf 101 über den Topfring 105 rotationsfest sichert. Der Eingriff des Verriegelungszapfens in die Vertiefung 109 des Topfringes 105 ist in der nächsten Figur, Figur 4 dargestellt.

In **Figur 4** ist eine perspektivische Ansicht auf den Topfring 105 dargestellt, wobei der Topfring 105 auf einem Topf 101 aufsitzt. Deutlich ist die Falz 108 zu erkennen, die in dieser Ausgestaltung eine Verlängerung 108' aufweist, die ähnlich einem Zahn hervorsteht. Diese Verlängerung 108' greift wie ein Zahn hinter die Verlängerung 104' des zylindrischen oder konischen Wandsegments 104, dargestellt in Figur 3. In dieser Darstellung ist der Verriegelungszapfen 110 gezeigt, der nicht Teil des Topfes 101 und auch nicht Teil des Topfringes 105 ist. Zur Demonstration, wie der Verriegelungszapfen 110 in die Vertiefung 109 greift, die in den Falz des Topfringes 105 eingeformt ist, ist der Verriegelungszapfen 110 in Alleinstellung eingeblendet. Durch den Verriegelungszapfen 110 und durch die Verlängerung 108' als Teil der Falz 108 ist der Topf in mindestens zwei Freiheitsgraden fixiert. In dieser Darstellung in Figur 4 ist gezeigt, dass die Vertiefung 109 nach unten offen ist. Der Topf 101 kann also mit dem Topfring 105 mühelos vertikal nach oben gehoben werden, um den Topf 101 aus der Grundmaschine 103 zu entfernen.

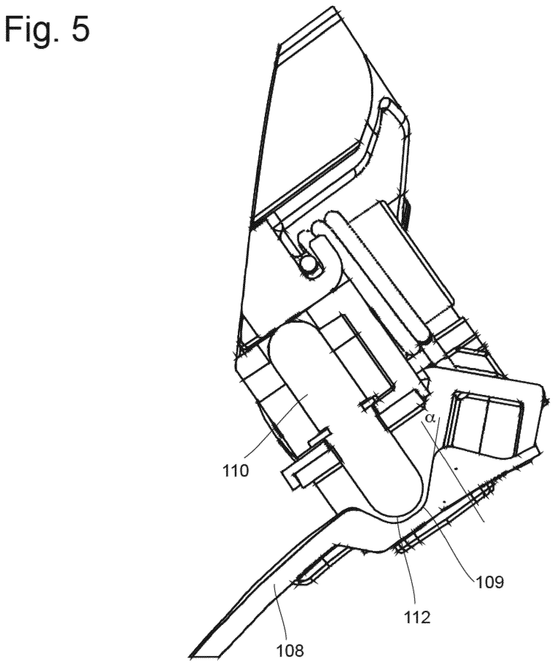

In **Figur 5** ist ein horizontaler Schnitt im Bereich der Verriegelungsanordnung gezeigt. Deutlich ist erkennbar, wie der Verriegelungszapfen 110 in die Vertiefung der Falz 108 des Topfringes 105 eingreift. Dabei ist erkennbar, dass der Verriegelungszapfen 110 eine Abrundung 112 aufweist. Zusammen mit dem flachen Böschungswinkel □ der Vertiefung 109 ist es möglich, unter Deformation des Topfringes 105 den Topf 101 gewaltsam aus der Grundmaschine 103 zu befreien. Es ist nach dem Gedanken der Erfindung vorgesehen, dass die Entfernung unter Kraftanwendung oder mühelos möglich ist, um eine Küchenhavarie zu vermeiden, wenn ein Nutzer den Topf 101 reflektorisch aus der Grundmaschine entfernen will, um zum Beispiel zu verhindern, das Kochgut überkocht.

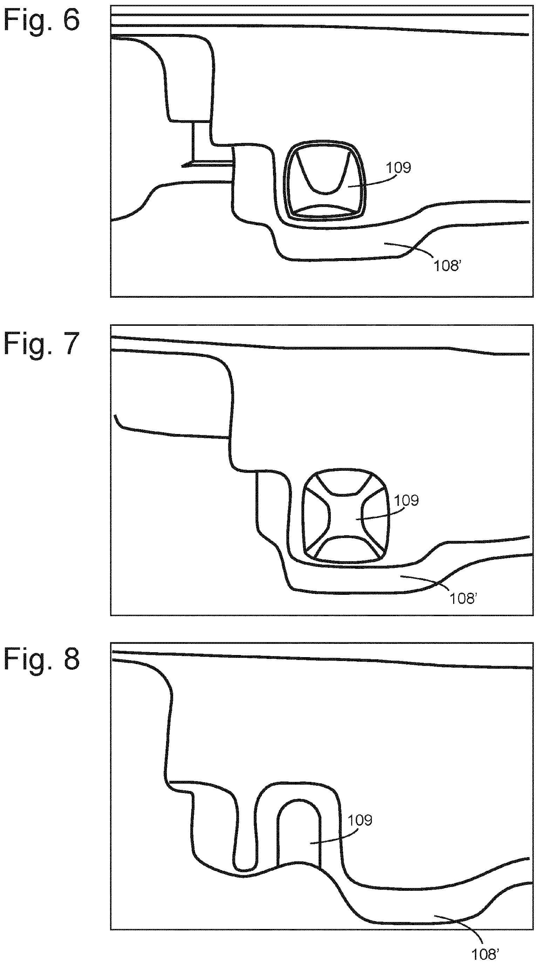

In der Figuren **Figur 6**, **Figur 7**, und **Figur 8** sind verschieden Ausgestaltungen der Vertiefung 109 gezeigt, die eine etwa unterschiedliche relative Position zur Verlängerung 108' der Falz 108 aufweisen. In Figur 6 befindet sich eine Vertiefung 109 mit einem recht passgenauen Profil unmittelbar oberhalb der Verlängerung 108' der Falz 108. Greift der Schließzapfen 110 in Verriegelungsstellung in die Vertiefung 109 ein, kann Schließzapfen 110 nicht durch Rotieren des Rings 105 aus der Vertiefung 109 befreit werden und der Topf 101 kann auch nicht durch Anheben aus der Grundmaschine 103 entnommen werden. Greift der Schließzapfen 110 in Entriegelungsstellung in die Vertiefung 109 ein, kann er durch Rotation des Rings 105 aus der Vertiefung 109 befreit, also herausbewegt, werden, aber der Topf 101 kann, solange der Schließzapfen sich noch in der Vertiefung 109 befindet, nicht durch Anheben aus der Grundmaschine 103 entnommen werden. Die zur Vertiefung 109 in Figur 6 korrespondierende Vertiefung 109 in Figur 7weist in vertikaler Richtung eine Anlaufschräge auf. Dies hat zur Folge, dass, wenn der Schließzapfen 110 in Entriegelungsstellung in die Vertiefung 109 eingreift, der Topf 101 durch Anheben aus der Grundmaschine 103 entnommen werden kann. Im Übrigen verhält sich die Ausführungsform so wie diejenige der Figur 6. In Figur 8 ist schließlich eine dritte Variante des Fallensystems dargestellt. Die Vertiefung 109 in Figur 8 ist gegenüber der Verlängerung 108' der Falz 108 versetzt angeordnet und außerdem ist die Vertiefung 109 nach unten offen. Ein in die Vertiefung 109 ragender Verriegelungszapfen, der wie ein Schließblech in eine Falle ragendes Schließblech wirkt, ließe sich durch vertikales Anheben des Topfes 101 mitsamt Topfring 105 aus der Falle ziehen, und zwar unabhängig davon, ob der Schließzapfen 110 sich in Entriegelungsstellung oder in Verriegelungsstellung befindet.

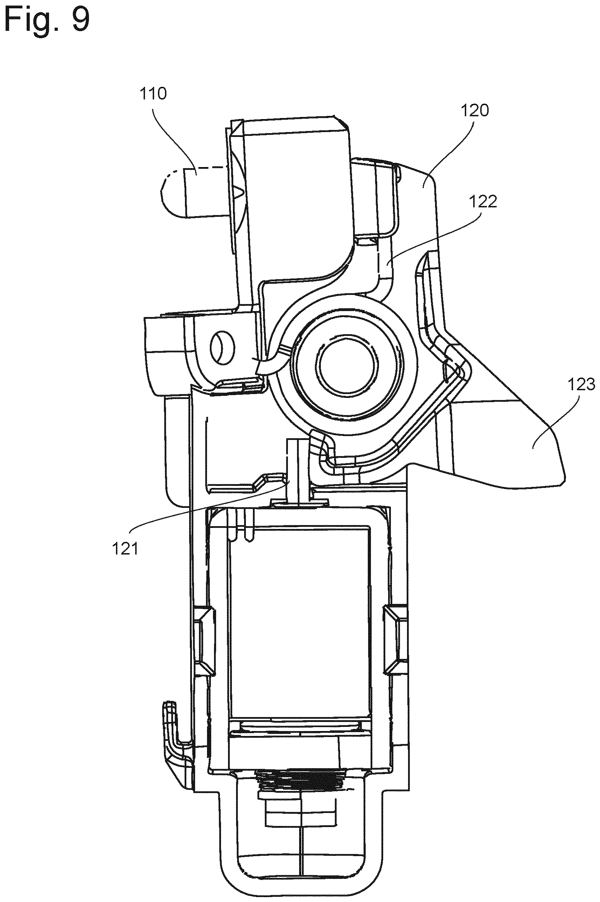

In Figur 9 ist schließlich eine Skizze eines Verriegelungsmoduls dargestellt, welches den Verriegelungszapfen 110 auf einem Kipphebel 120 trägt. Der über eine Rückstellfeder 122 gespannte Kipphebel 120 lässt sich mit einem Bedienhebel 123 durch Druck nach unten betätigen, wobei der Verriegelungszapfen 110 in dieser Skizze durch den Kipphebel nach rechts zurückgezogen wird, sofern dies durch den elektromagnetisch angetriebene Riegel 121 möglich ist, Ist der Riegel 121 ausgefahren, so ist eine Bedienung des Kipphebels 120 nicht möglich, weil der Riegel 121 den Kipphebel 120 sperrt. Ist der Riegel 121 jedoch elektromagnetisch nach unten in die Spule gezogen, so ist der Kipphebelweg frei und der Kipphebel kann manuell bedient werden, wodurch sich der Verriegelungszapfen nach rechts bewegt und aus der Vertiefung gehoben wird.

Dieses Verriegelungssystem ermöglicht ein einfaches Verriegeln des Topfes und eine schnelle Entfernung eines verriegelten Topfes aus der Küchenmaschine.

**BEZUGSZEICHENLISTE**

| | | | |
|---|---|---|---|
| 100 | Küchenmaschine | 108' | Verlängerung |
| 101 | Topf | 109 | Vertiefung |
| 102 | Topfaufnahmevorrichtung | 110 | Verschlusszapfen |
| 103 | Grundmaschine | 111 | Verlängerung |
| 104 | Wandsegment | 112 | Abrundung |
| 104' | Verlängerung | 120 | Kipphebel |
| 105 | Topfring | 121 | Riegel |
| 106 | Rand | 122 | Rückstellfeder |
| 107 | Wand | 123 | Bedienhebel |
| 108 | Falz | α | Winkel |

## Patentansprüche

1. Küchenmaschine (100) zum bereiten von Speisen in einem Topf (101), aufweisend ein Verriegelungssystem, aufweisend die Komponenten
- eine Topfaufnahmevorrichtung (102) der Grundmaschine (103) mit einem zylindrischen oder konischen Wandsegment (104),
- einen zur Topfaufnahmevorrichtung (102) formkorrespondierenden Topf (101),
wobei der Topf (101) in der Topfaufnahmevorrichtung (102) an dem zylindrischen oder konischen Wandsegment (104) anliegt, oder zu diesem unmittelbar benachbart ist,
- einen Topfring (105), der lösbar mit dem Rand (106) des Topfes (101) verbindbar ist,
wobei der Topfring (105) zusammen mit der Wand (107) des Topfes (101) einen Umschlag bildet, wobei der Falz (108) des Umschlags als Teil des Topfrings (105) von der Topfwand (107) beabstandet ist, und
wobei der Falz (108) hinter das zylindrische oder konische Wandsegment (104) greift,
**dadurch gekennzeichnet, dass**
auf der Außenseite der Falz (108) eine Vertiefung (109) als Falle angeordnet ist, in welche ein betätigbarer Verschlusszapfen (110) eingreift, der aus einer Verlängerung (111) des zylindrischen oder konischen Wandsegments herausragt.

2. Küchenmaschine nach Anspruch 1,
**dadurch gekennzeichnet, dass**
die Vertiefung (109) auf der Außenseite der Falz (108) einen Böschungswinkel (a) von weniger als 45° aufweist und dass der Verschlusszapfen (110) eine dazu korrespondierende Fase oder Abrundung (112) aufweisen.

3. Küchenmaschine nach einem der Ansprüche 1 oder 2,
**dadurch gekennzeichnet, dass**
die Vertiefung (109) auf der Außenseite der Falz (108) zur Unterseite offen ist.

4. Küchenmaschine nach einem der Ansprüche 1 bis 3,
**dadurch gekennzeichnet, dass**
der Topfring (105) mit dem Topf (101) über ein Bajonett-System verbunden ist.

5. Küchenmaschine nach einem der Ansprüche 1 bis 4,
**dadurch gekennzeichnet, dass**
die hinter das zylindrische oder konische Wandsegment (104) greifende Falz (108) über ein Kreissegment zwischen 2° und 30° eine Verlängerung (108') aufweist, wobei
dass sich zylindrische oder konische Wandsegment (104) über ein Kreissegment zwischen 2° und 45° erstreckt und ebenfalls eine Verlängerung (104') aufweist und mit der Verlängerung (108') der Falz (108) in Eingriff steht, wenn sich der Topf (101) in der Grundmaschine (103) befindet.

6. Küchenmaschine nach einem der Ansprüche 1 bis 5,
**dadurch gekennzeichnet, dass**
der Verschlusszapfen (110) an einem manuell bedienbaren Kipphebel (120) angeordnet ist, wobei der Kipphebel (120) über einen angetriebenen Riegel (121) verriegelbar ist.

7. Küchenmaschine nach Anspruch 6,
**dadurch gekennzeichnet, dass**
der Kipphebel (120) über eine Rückstellfeder (122) federgespannt ist und den Verschlusszapfen (110) in der Verriegelungsposition hält.

8. Küchenmaschine nach einem der Ansprüche 6 oder 7,
**dadurch gekennzeichnet, dass**
der elektromagnetisch angetriebene Riegel (121) über eine Steuerungsvorrichtung in der Küchenmaschine gesteuert ist, wobei
die Steuerungsvorrichtung den elektromagnetisch angetriebenen Riegel (121) bei Überschreiten einer voreingestellten Umdrehungszahl eines in der Küchenmaschine vorhandenen Antriebsmotors für ein Rührwerk im Verschlusszustand hält und bei Unterschreiten dieser voreingestellten Umdrehungszahl diesen Riegel (121) im Öffnungszustand hält.

9. Küchenmaschine nach einem der Ansprüche 6 bis 8,
**dadurch gekennzeichnet, dass**
der elektromagnetisch angetriebene Riegel (121) über eine Steuerungsvorrichtung in der Küchenmaschine gesteuert ist, wobei
die Steuerungsvorrichtung den elektromagnetisch angetriebenen Riegel (121) bei Überschreiten einer voreingestellten Topftemperatur im Verschlusszustand hält und bei Unterschreiten dieser voreingestellten Topftemperatur diesen Riegel (121) im Öffnungszustand hält.

10. Küchenmaschine nach einem der Ansprüche 1 bis 9,
**dadurch gekennzeichnet, dass**
der Verschlusszapfen (110) mit einem Notschalter verbunden ist, der bei gewaltsamem Entfernen des Topfes (101) aus der Grundmaschine (103), die gesamte Küchenmaschine (100) stromlos schaltet.

11. Küchenmaschine nach einem der Ansprüche 1 bis 10,
**dadurch gekennzeichnet, dass**
die Vertiefung (109) so ausgebildet ist, dass der Verschlusszapfen (110) in Verriegelungsstellung durch Rotieren des Topfrings (105) nicht aus der Vertiefung (109) befreit werden kann.

12. Küchenmaschine nach einem der Ansprüche 1 bis 11,
**dadurch gekennzeichnet, dass**
die Vertiefung (109) so ausgebildet ist, dass der Verschlusszapfen (110) in Entriegelungsstellung durch Rotieren des Topfrings (105) aus der Vertiefung (109) befreit werden kann.

13. Küchenmaschine nach einem der Ansprüche 1 bis 12,
**dadurch gekennzeichnet, dass**
die Vertiefung (109) so ausgebildet ist, dass in der Entriegelungsstellung des Verschlusszapfens (110) der Topf (101) nicht durch Anheben aus der Grundmaschine (103) entnommen und der Verschlusszapfen (110) nicht aus der Vertiefung (109) befreit werden kann.

14. Küchenmaschine nach einem der Ansprüche 1 bis 12,
**dadurch gekennzeichnet, dass**
die Vertiefung (109) so ausgebildet ist, dass in Entriegelungsstellung des Verschlusszapfens (110) der Topf (101) durch Anheben aus der Grundmaschine (103) entnommen und der Verschlusszapfen (110) aus der Vertiefung (109) befreit werden kann.

15. Küchenmaschine nach einem der Ansprüche 1 bis 12 oder 14,
**dadurch gekennzeichnet, dass**
die Vertiefung (109) so ausgebildet ist, dass in Verriegelungsstellung des Verschlusszapfens (110) der Topf (101) nicht durch Anheben aus der Grundmaschine (103) entnommen und der Verschlusszapfen (110) nicht aus der Vertiefung (109) befreit werden kann.

16. Küchenmaschine nach einem der Ansprüche 1 bis 12 oder 14,
**dadurch gekennzeichnet, dass**
die Vertiefung (109) so ausgebildet ist, dass in Verriegelungsstellung des Verschlusszapfens (110) der Topf (101) durch Anheben aus der Grundmaschine (103) entnommen und der Verschlusszapfen (110) aus der Vertiefung (109) befreit werden kann.

## Claims

1. Kitchen appliance (100) for preparing food in a pan (101), having a locking system, having the components
- a pan receiving apparatus (102) of the basic machine (103) with a cylindrical or conical wall segment (104),
- a pan (101) which corresponds in shape to the pan receiving apparatus (102),
wherein the pan (101) in the pan receiving apparatus (102) rests against the cylindrical or conical wall segment (104), or is directly adjacent thereto,
- a pan ring (105), which can be detachably connected to the edge (106) of the pan (101), wherein the pan ring (105) together with the wall (107) of the pan (101) forms a cover, wherein the fold (108) of the cover as part of the pan ring (105) is at a distance from the pan wall (107), and
wherein the fold (108) engages behind the cylindrical or conical wall segment (104),
**characterised in that**
a depression (109) is arranged as a catch on the exterior of the fold (108), in which depression an actuatable locking pin (110) engages, which projects from an extension (111) of the cylindrical or conical wall segment.

2. Kitchen appliance according to claim 1,
**characterised in that**
the depression (109) on the exterior of the fold (108) has an angle of repose (α) of less than 45°, and that the locking pin (110) has a bevel or rounding (112) which corresponds thereto.

3. Kitchen appliance according to one of claims 1 or 2,
**characterised in that**
the depression (109) on the exterior of the fold (108) is open toward the lower side.

4. Kitchen appliance according to one of claims 1 to 3,
**characterised in that**
the pan ring (105) is connected to the pan (101) by way of a bayonet system.

5. Kitchen appliance according to one of claims 1 to 4,
**characterised in that**
the fold (108) engaging behind the cylindrical or conical wall segment (104) has an extension (108') above a circular segment between 2° and 30°
wherein
cylindrical or conical wall segment (104) extends above a circular segment between 2° and 45° and likewise has an extension (104') and engages with the extension (108') of the fold (108) if the pan (101) is located in the basic machine (103).

6. Kitchen appliance according to one of claims 1 to 5,
**characterised in that**
the locking pin (110) is arranged on a manually operable rocker (120), wherein the rocker (120) can be locked by way of a driven bolt (121).

7. Kitchen appliance according to claim 6,
**characterised in that**
the rocker (120) is spring-tensioned by way of a reset spring (122) and keeps the locking pin (110) in the locking position.

8. Kitchen appliance according to one of claims 6 or 7,
**characterised in that**
the electromagnetically driven bolt (121) is controlled by way of a control apparatus in the kitchen appliance, wherein
the control apparatus keeps the electromagnetically driven bolt (121) in the locking state when a preset number of revolutions of a drive motor available in the kitchen appliance for a stirrer is exceeded and keeps this bolt (121) in the opening state when this preset number of revolutions is not reached.

9. Kitchen appliance according to one of claims 6 to 8,
**characterised in that**
the electromagnetically driven bolt (121) is controlled by way of a control apparatus in the kitchen appliance, wherein
the control apparatus keeps the electromagnetically driven bolt (121) in the locking state when a preset pan temperature is exceeded and keeps this bolt (121) in the opening state when this preset pan temperature is not reached.

10. Kitchen appliance according to one of claims 1 to 9,
**characterised in that**
the locking pin (110) is connected to an emergency switch which, when the pan (101) is forcibly removed from the basic machine (103), switches off the entire kitchen appliance (100).

11. Kitchen appliance according to one of claims 1 to 10,
**characterised in that**
the depression (109) is embodied so that in the locking position the locking pin (110) cannot be released from the depression (109) by rotating the pan ring (105).

12. Kitchen appliance according to one of claims 1 to 11,
**characterised in that**
the depression (109) is embodied so that in the unlocking position the locking pin (110) can be released from the depression (109) by rotating the pan ring (105).

13. Kitchen appliance according to one of claims 1 to 12,
**characterised in that**
the depression (109) is embodied so that in the unlocking position of the locking pin (110), the pan (101) cannot be removed from the basic machine (103) by means of lifting and the locking pin (110) cannot be released from the depression (109).

14. Kitchen appliance according to one of claims 1 to 12,
**characterised in that**
the depression (109) is embodied so that in the unlocking position of the locking pin (110), the pan (101) can be removed from the basic machine (103) by means of lifting and the locking pin (110) can be released from the depression (109).

15. Kitchen appliance according to one of claims 1 to 12 or 14,
**characterised in that**
the depression (109) is embodied so that in the locking position of the locking pin (110), the pin (101) cannot be removed from the basic machine (103) by means of lifting and the locking pin (110) cannot be released from the depression (109).

16. Kitchen appliance according to one of claims 1 to 12 or 14,
**characterised in that**
the depression (109) is embodied so that in the locking position of the locking pin (110) the pan (101) can be removed from the basic machine (103) by means of lifting and the locking pin (110) can be released from the depression (109).

## Revendications

1. Robot de cuisine (100) pour la préparation de repas dans un récipient (101), présentant un système de verrouillage qui présente les composants suivants
- un dispositif d'accueil de récipient (102) de la machine de base (103) avec un segment de paroi cylindrique ou conique (104),
- un récipient (101) dont la forme correspond au dispositif d'accueil de récipient (102), dans lequel le récipient (101) est, dans le dispositif d'accueil de récipient (102), contigu au segment de paroi cylindrique ou conique (104) ou l'avoisine directement,
- une bague de récipient (105) reliable de façon amovible au bord (106) du récipient (101),
dans lequel la bague de récipient (105) forme avec la paroi (107) du récipient (101) une enveloppe, dans laquelle le pli (108) de l'enveloppe faisant partie de la bague de récipient (105), est distant de la paroi de récipient (107), et
dans lequel le pli (108) s'engrène derrière le segment de paroi cylindrique ou conique (104), **caractérisé en ce qu'**un renfoncement (109) sous forme de loqueteau est disposé sur le côté extérieur du pli (108), dans lequel renfoncement un tenon de verrouillage actionnable (110) s'engrène, lequel fait saillie d'un prolongement (111) du segment de paroi cylindrique ou conique.

2. Robot de cuisine selon la revendication 1, **caractérisé en ce que** le renfoncement (109) sur le côté extérieur du pli (108) présente un angle de talus (a) inférieur à 45° et **en ce que** le tenon de verrouillage actionnable (110) présente un biseau ou arrondissement (112) correspondant.

3. Robot de cuisine selon l'une des revendications 1 ou 2, **caractérisé en ce que** le renfoncement (109) est ouvert en direction du côté inférieur sur le côté extérieur du pli (108).

4. Robot de cuisine selon l'une des revendications 1 à 3, **caractérisé en ce que** la bague de récipient (105) est reliée au récipient (101) via un système à baïonnette.

5. Robot de cuisine selon l'une des revendications 1 à 4, **caractérisé en ce que** le pli (108) qui s'engrène derrière le segment de paroi cylindrique ou conique (104) présente sur un segment circulaire entre 2° et 30° un prolongement (108'), dans lequel le segment de paroi cylindrique ou conique (104) s'étend sur un segment circulaire entre 2° et 45° et présente également un prolongement (104') et s'engrène avec le prolongement (108') du pli (108) lorsque le récipient (101) se trouve dans la machine de base (103).

6. Robot de cuisine selon l'une des revendications 1 à 5, **caractérisé en ce que** le tenon de verrouillage (110) est disposé sur un levier basculant manuel (120), dans lequel le levier basculant (120) est verrouillable via un pêne actionné (121).

7. Robot de cuisine selon la revendication 6, **caractérisé en ce que** le levier basculant (120) est mis sous contrainte élastique via un ressort de rappel (122) et maintient le tenon de verrouillage (110) dans la position de verrouillage.

8. Robot de cuisine selon l'une des revendications 6 ou 7, **caractérisé en ce que** le pêne à actionnement électromagnétique (121) est commandé via un dispositif de commande dans le robot de cuisine, dans lequel le dispositif de commande maintient le pêne à actionnement électromagnétique (121) dans l'état verrouillé en présence d'un dépassement d'une vitesse de rotation prédéfinie d'un moteur d'entraînement pour un malaxeur présent dans le robot de cuisine et maintient ce pêne (121) dans l'état d'ouverture en-deçà de cette vitesse de rotation prédéfinie.

9. Robot de cuisine selon l'une des revendications 6 à 8, **caractérisé en ce que** le pêne à actionnement électromagnétique (121) est commandé via un dispositif de commande dans le robot de cuisine, dans lequel le dispositif de commande maintient le pêne à actionnement électromagnétique (121) dans l'état verrouillé en présence d'un dépassement d'une température de récipient prédéfinie et maintient ce pêne (121) dans l'état d'ouverture en-deçà de cette température de récipient prédéfinie.

10. Robot de cuisine selon l'une des revendications 1 à 9, **caractérisé en ce que** le tenon de verrouillage (110) est relié à un interrupteur d'arrêt d'urgence qui met l'ensemble du robot de cuisine (100) hors tension lorsque le récipient (101) est retiré par la force de la machine de base (103).

11. Robot de cuisine selon l'une des revendications 1 à 10, **caractérisé en ce que** le renfoncement (109) est formé de telle sorte que le tenon de verrouillage (110) ne peut, en position de verrouillage, être libéré du renfoncement (109) par rotation de la bague de récipient (105).

12. Robot de cuisine selon l'une des revendications 1 à 11, **caractérisé en ce que** le renfoncement (109) est formé de telle sorte que le tenon de verrouillage (110) peut, en position de déverrouillage, être libéré du renfoncement (109) par rotation de la bague de récipient (105).

13. Robot de cuisine selon l'une des revendications 1 à 12, **caractérisé en ce que** le renfoncement (109) est formé de telle sorte que dans la position de déverrouillage du tenon de verrouillage (110), le récipient (101) ne peut être enlevé en le levant hors de la machine de base (103) et le tenon de verrouillage (110) ne peut être libéré du renfoncement (109).

14. Robot de cuisine selon l'une des revendications 1 à 12, **caractérisé en ce que** le renfoncement (109) est formé de telle sorte que dans la position de déverrouillage du tenon de verrouillage (110), le récipient (101) peut être enlevé en le levant hors de la machine de base (103) et le tenon de verrouillage (110) peut être libéré du renfoncement (109).

15. Robot de cuisine selon l'une des revendications 1 à 12 ou 14, **caractérisé en ce que** le renfoncement (109) est formé de telle sorte que dans la position de verrouillage du tenon de verrouillage (110), le récipient (101) ne peut être enlevé en le levant hors de la machine de base (103) et le tenon de verrouillage (110) ne peut être libéré du renfoncement (109).

16. Robot de cuisine selon l'une des revendications 1 à 12 ou 14, **caractérisé en ce que** le renfoncement (109) est formé de telle sorte que dans la position de verrouillage du tenon de verrouillage (110), le récipient (101) peut être enlevé en le levant hors de la machine de base (103) et le tenon de verrouillage (110) peut être libéré du renfoncement (109).
